# EUROPEAN PATENT APPLICATION

(11) **EP 2 804 069 A1**
(43) Date of publication of application: **19.11.2014**
(21) Application number: 13305625.9
(22) Date of filing: 16.05.2013
(51) Int. Cl.: G06F 1/16, G06F 3/01

(54) **Method to compute a split viewport across devices with gesture**

(71) Applicant: Orange, 75015 Paris (FR)
(72) Inventor: Hegab, Ashraf, London, SE15 6QX (GB); Leveque, Laurent, London, W3 7TT (GB); Diarrassouba Valy, Valy, London, W6 7EP (GB); Faidy, Diane, London, W14 9SR (GB)

(57) **Abstract**

Present invention relates to an electronic device comprising a display element, a communication interface and a motion sensor, the electronic device further comprising a control circuit adapted to pair with at least a second electronic device using the communication interface, the pairing comprising sharing a media content into a first and at least a second portion of said media content, so that the first electronic device can render the first portion while the at least second electronic device can render the at least second portion, render on the display element the first portion of the media content, monitor using the motion sensor a first user gesture input, compare the first user gesture input to a stored gesture signature and render the second portion of the media content based on the comparison.

## Description

### FIELD OF THE PRESENT SYSTEM:

The present invention generally relates to electronic devices, and more specifically to the pairing of electronic devices.

### BACKGROUND OF THE PRESENT SYSTEM:

Today electronic devices such as mobile devices, tablets and the likes allow rendering graphical objects through GUIs (Graphical User Interfaces). A user may even possess multiple such devices. In such case, a user would want to take profit of the multiple devices displays elements available.

Indeed, the respective devices' displays may be used to present an enlarged screen by placing these devices next to each other. Document WO2010001371 teaches a virtual display or virtual screen between a plurality of electronic devices placed next to each other. Thanks to this virtual display, a large image or video can be distributed among the devices so that all portions displayed form together the large image or part of it. Such technique needs the devices to be placed in contact with one another, and relies upon NFC (Near Field Communication) techniques to exchange display information. Furthermore, their edges in contact allow the different devices to position one device with another.

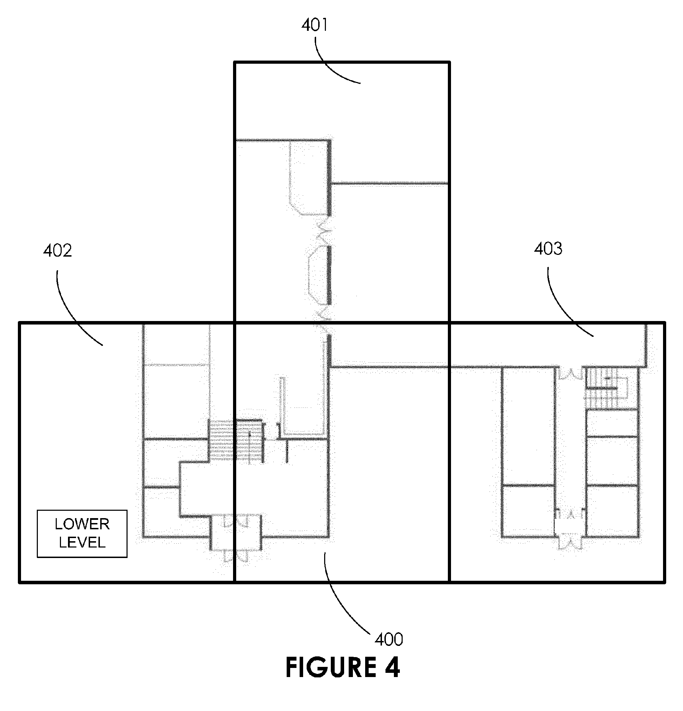

FIG. 4. is an illustration of such a situation, where the four electronic devices 400, 401, 402 and 403 are used to share a same large image (here the "lower level" map of a building, as mentioned in the display of electronic device 402).

Such approach needs a specific kind of display devices, such as an electronic paper using both NFC and contact technologies.

When dealing with known devices such as tablets or mobile devices, this fluid display cannot be transposed as the specific technologies mentioned here above are not commonly found. A user may only have access to a limited number of devices to create a virtual screen and discover a large image. Furthermore, using electronic devices like mobile devices, when sharing images or more generally media content among two or more devices, the devices may know not left from right, or up from down. The user will have to move the different electronic devices he's using to share a media content to reorder the rendering of said content, making that reordering cumbersome and tedious.

There is still a need today to enable a virtual screen while giving the user an easy solution to reposition the devices layout.

### SUMMARY OF THE PRESENT SYSTEM:

It is an object of the present system to overcome disadvantages and/or make improvements in the prior art.

The present system relates to an electronic device comprising a display element, a communication interface and a motion sensor, the electronic device further comprising a control circuit adapted to pair with at least a second electronic device using the communication interface, the pairing comprising sharing a media content into a first and at least a second portion of said media content, so that the first electronic device can render the first portion while the at least second electronic device can render the at least second portion, render on the display element the first portion of the media content, monitor using the motion sensor a first user gesture input, compare the first user gesture input to a stored gesture signature and render the second portion of the media content based on the comparison.

Advantageously, a user with at least two paired electronic devices sharing a media content may, by simply performing a gesture input with a first electronic device, change the portion of the media content displayed on its first electronic device to a second portion of the media content. Indeed, a user creating a virtual display by positioning four electronic devices as shown in FIG. 4 may adapt the portion of the media content displayed by a given electronic device by doing a user gesture with said electronic device, thus positioning simply and quickly the different portion of the media content among the four electronic devices without any captor, contact technology or complex configuring steps of as in existing technologies.

In a complementary embodiment of present electronic device, the stored gesture signature is associated to switching the rendered portion between the first electronic device and a second electronic device, the control circuit being further arranged to execute the switching, the switching comprising the acts of rendering on the display element the second portion of the media content and sending a message to the paired second electronic device, said message comprising a request to render on the display element of the second electronic device the first portion of the media content.

This embodiment allows a user to conveniently switch the display between a first and a second paired electronic device. Thus, when positioning two electronic devices next to the other in order to create a bigger virtual screen and share a media content on this screen, a user will not have to wonder which electronic device to position left or right (or top or down). Indeed, if the user positioned wrongly the two electronic devices, a simple gesture input will allow the portion of the media content displayed on the electronic devices to be switched.

In a further embodiment of present electronic device, the previous sent message comprises the first portion of the media content.

Advantageously, only needed media content are exchanged, preserving the bandwidth. Also, if for any reason the second electronic device does not have the requested portion of the media content to be displayed, sending the portion along the request solves the problem.

In a complementary embodiment of present electronic device, the switching comprising prior acts of sending a message to the paired second electronic device, said message comprising a request to receive the second portion of the media content and receiving a message comprising the second portion of the media content.

Like previously, if for any reason the first electronic device does not have the second portion of the media content, these previous steps allows the first device to retrieve the missing portion of the media content.

In a complementary embodiment, each portion of the media content is associated to a stored gesture signature, the control circuit being further arranged to, when comparing the first user gesture input, identify a stored gesture signature from the first user gesture input and render the portion of the media content associated to the identified gesture signature.

In this embodiment, a given user gesture is associated to a given portion of the media content. This embodiment may be particularly advantageous over precedent embodiment when more than two electronic devices are used by the user. Indeed, when for example four electronic devices are combined to share a media content on a virtual screen composed by these four electronic devices, and if these four electronic devices are not correctly positioned by the user from the beginning, it may prove tedious to re-organize the virtual screen just by switching the portions of the media content between two electronic devices at a time. This embodiment allows for example to associate a different user gesture to "top-left", "top-right", "bottom-left" and "bottom-right" portion of a shared media content. Thus, a user could perform the "top-right" user gesture with the electronic device placed at the top-right position to immediately display the correct portion of the media content on said electronic device display, and so on.

Correlatively the present system relates to a method for rendering a portion of a media content on a display element of a first electronic device, the method being performed by an application program executed on the first electronic device, the first electronic device comprising a display element, a communication interface and a motion sensor, the method comprising the acts of pairing with at least a second electronic device using the communication interface, the pairing comprising sharing a media content into a first and at least a second portion of said media content, so that the first electronic device can render the first portion while the at least second electronic device can render the at least second portion, rendering on the display element the first portion of the media content, monitoring using the motion sensor a first user gesture input, comparing the first user gesture input to a stored gesture signature and rendering the second portion of the media content based on the comparison.

The advantages obtained by such method contribute to the advantages obtained by the electronic device previously detailed and as such are not further described.

In a complementary embodiment of the method, the stored gesture signature is associated to switching the rendered portion between the first electronic device and a second electronic device, the method further comprises the step of switching from the rendering of the first portion of the media content to the rendering of the second portion based on the comparison.

In a further embodiment of the method, each portion of the media content is associated to a stored gesture signature, the method further comprises the steps of, when comparing the first user gesture input, identifying a stored gesture signature from the first user gesture input and rendering the portion of the media content associated to the identified gesture signature.

As well, the system for rendering portions of a media content comprises a first and at least a second electronic device correspondent to previously described electronic devices.

Finally, one object of the present system concerns a computer program, in particular computer programs on or in an information medium or memory, suitable for implementing the method for computing a split viewport across devices with gesture object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIG. 1 shows an exemplary embodiment of an electronic device in accordance with present system;
FIGs. 2A, 2B and 2C show an exemplary embodiment of present method with two electronic devices;
FIG. 3 shows an exemplary flowchart for computing a split viewport across devices with gesture according to an embodiment of the present method;
FIG. 4 shows an exemplary embodiment of four electronic devices sharing their displays to display a shared image in accordance with known methods.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a touch display device so that it may be seen and interacted with by a user. The term rendering may also comprise all the actions required to generate a GUI prior to the display, like e.g. a map image or a GUI comprising a plurality of icons generated on a server side for a browser application on a mobile device. Hereafter, the sentence "the electronic device renders on the display (element)" may be shortened to "the electronic device displays".

The system, electronic device(s), method, user interface, etc., described herein address problems in prior art systems. In accordance with an embodiment of the present system, a mobile device or electronic device provides a GUI for controlling an application program, possibly through touch and motion inputs.

A graphical user interface (GUI) may be provided in accordance with an embodiment of the present system by an application program running on a processor, such as part of a computer system of a mobile device and/or as provided by a network connected device, such as a web-based server hosting the application. The provided visual environment may be displayed by the processor on a display element of the mobile device.

A GUI is a type of user interface which allows a user to interact with electronic devices such as computers, hand-held devices, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or vector representations. The graphical images can include windows, fields, dialog boxes, menus, icons, buttons, cursors, scroll bars, maps, etc. Such images can be arranged in predefined layouts, or can be created dynamically (by the device itself or by a web-based server) to serve the specific actions being taken by a user. In general, the user can select and/or activate various graphical images in order to initiate functions and tasks, i.e. controls, associated therewith. By way of example, a user can select a button that opens, closes, minimizes, or maximizes a window, or an icon that launches a particular program. By way of another example, the GUI may present a typical user interface including a windowing environment and as such, may include menu items, pull-down menu items, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system.

In the description hereafter, an application program - or software - may be seen as any tool that functions and is operated by means of a computer, with the purpose of performing one or more functions or tasks for a user or another application program. To interact with and control an application program, a GUI of the AP may be displayed on the mobile device display.

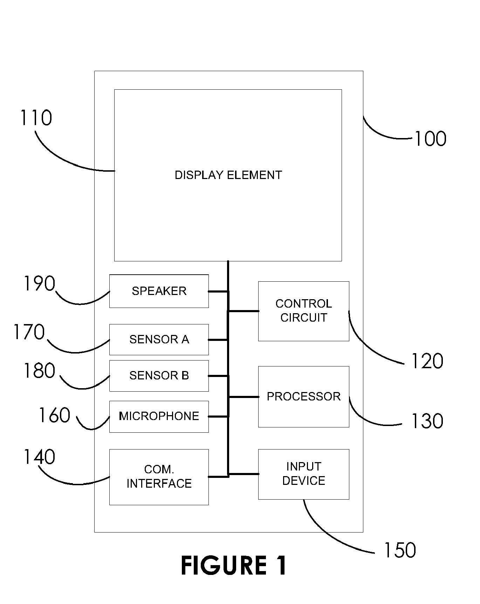

FIG. 1 is an illustration of an exemplary electronic device 100 used in the present system. The electronic device 100 comprises at least a display element or screen 110, a control circuit 120, a processor 130, a network element or communication interface 140, at least an input element 150, a microphone 160, possibly one or more sensor(s) 170 and 180 and possibly a speaker 190.

In the present system, the user interaction with and manipulation of the application program rendered on a GUI can be achieved using:
- the display element 110, or screen, which could be a touch panel;
- the input device 150 such as a key panel when available on the electronic device 100, or an external keyboard connected via the network element 140 (via Bluetooth connection for example).

Processor 130 may control the generation and the rendering of the GUI on the display element 110 (the information required to generate and manipulate the GUI resides entirely on the electronic device 100) or simply the rendering when the GUI is provided by a remote (i.e. network connected via network element 140) electronic device (the information, including in some instances the GUI itself is retrieved via a network connection through network interface 140). However, advantageously, a control circuit 120 may be dedicated to such task of rendering the GUI on the display element 110. For simplicity sake, in the following description it will be considered that the sentence "the electronic device renders on the display element a GUI of an application program" should be understood either as "the processor of the electronic device renders on the display element a GUI of an application program" or "the control circuit of the electronic device on the display element a GUI of an application program" according to the way the electronic device 100 is implemented. The fact that the rendering on the display element is controlled either by the processor directly or by a control circuit depends on hardware constraints or technical choice.

One or more sensors 170 and 180 are available, the reading of which can be used by the processor 130. Most of the new devices, such as the smartphones or tablets released on the market over the recent years have some components embedded thereon to track movement and positioning. Such sensors may be for example an accelerometer or a gyroscope - or more generally a motion sensor -, a compass, a GPS (Global Positioning System captor) or any other type of sensor.

A microphone 160 can monitor or receive audio signals. Normally used to capture the voice of a user for voice application - e.g. phone calls-, the microphone 160 could also possibly receive ultrasound signal. This microphone 160 can monitor, upon request of an application program, for surrounding sounds. The control circuit or the processor may extract or isolate from a captured sound a given audio signal, possibly doing so on a continuous basis.

A speaker 190 may advantageously be implemented in the electronic device 100. This speaker 190 can be used by voice application to render the voice of a correspondent for a phone application program (e.g. phone calls), or to render a music played by a media application. This speaker 190 may advantageously emit an ultrasound or any kind of sound according to application program instructions.

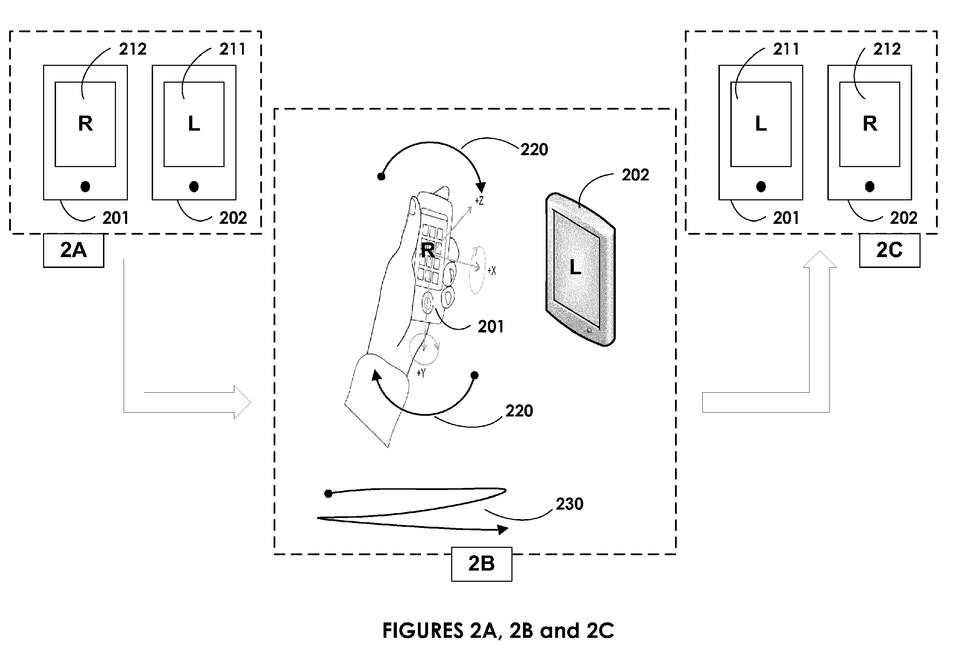

FIG.2A, 2B and 2C are describing an illustrative embodiment of present system. In this illustrative embodiment, two electronic devices 201 and 202 are represented. These electronic devices 201 and 202 are similar to the electronic device described in previous FIG.1 and are used by a user to constitute an enlarged virtual screen, virtual screen composed by the two display elements of the electronic devices 201 and 202.

FIG. 2A shows two paired electronic devices 201 and 202. The pairing step of electronic devices 201 and 202 is not described here as various technologies exist today to achieve such result. Once paired, the electronic devices 201 and 202 may share a media content into a first and a second portion of said media content. In other words, the media content shared between the two paired electronic devices is split into a first and a second portion of the media content. Said media content can be indifferently retrieved from the electronic device 201, the electronic device 202 or any other source. In the illustrative example of FIG. 2, the media content is divided in two portions, a left portion "L" 211 and a right portion "R" 212. For example, that would correspond to the left and right parts of an image or a video cut in two by the middle along a vertical axis. In FIG. 2, the electronic device 201, on the left, is rendering the right portion "R" of the media content 212, while the electronic device 212, on the right, is rendering the other portion "L" of the media content 211. In such situation, the two portions of the media content are incorrectly displayed on the virtual screen, right and left portions being inverted.

FIG. 2B illustrates the present system used on electronic device 201, but it should be noted that the present system object of the document could be used as well on electronic device 202 or on both electronic devices. In this figure, the electronic device 201 monitors using the motion sensor 170 or 180 a user gesture input. This user gesture input could be as described by user gesture 220, that is to say a rotation of the electronic device 201, or as described in user gesture 230, sort of forward-back-forward gesture, or any other kind of gesture, possibly using combination of movement, rotation, pause, variation of movement speed or any possibility offered by the motion sensor technology. The electronic device 201 compares this user gesture input to a stored gesture signature. If the user gesture input corresponds to the stored gesture signature, the electronic device 201 renders the second portion of the media content. Thus, upon detection of certain user gesture, said detection being based on a comparison of a user gesture input with a stored gesture signature, the electronic device 201 displays the second portion of the media content, that is to say the left portion "L" 211.

In a complementary embodiment of present system adapted to the description of FIG. 2B, the portions of the media content displayed by the electronic devices 201 and 02 are switched upon detection of a user gesture. Thus, in FIG. 2B, upon detection of a given user gesture, said detection being performed by comparing the user gesture input to a stored gesture signature, said stored gesture signature being associated to switching the rendered portion between the first and a second electronic device, the electronic device will switch its rendering on the display from rendering the right portion "R" 212 of the media content to rendering the left portion "L" 211 of the media content.

Optionally, as the electronic devices are paired, electronic device 201 may send also instruction to electronic device 202 to switch the rendering of its display from rendering the left portion "L" 211 of the media content to rendering the right portion "R" 212. Indeed, in this case, in one gesture, the user may correct the starting situation of FIG. 2A with incorrect rendering of the portions of the media content. By performing a user gesture as shown in FIG. 2B, the user obtains the final situation shown in FIG. 2C with correct display of the portions of the media content, the left positioned electronic device 201 displaying the left portion "L" 211 while the right positioned electronic device 202 displays the right portion "R" 212 of the media content.

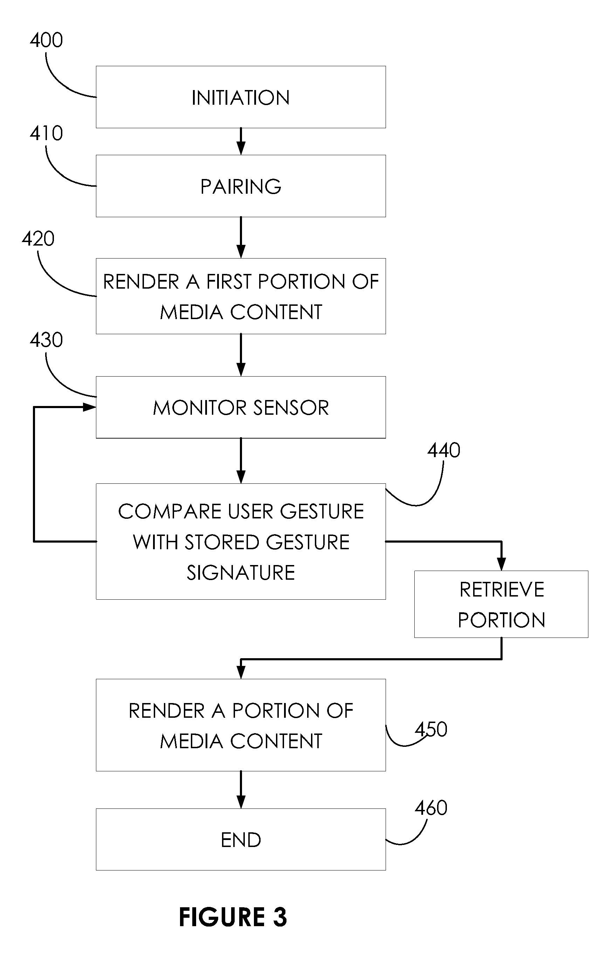

FIG. 3 is an illustrative embodiment of the present system. In a first step 400, an electronic device similar to electronic device 100 described in FIG.1 should start to execute an application or power on a control circuit.

In a second step 410, the electronic device will pair with at least a second electronic device. Pairing process is not further described as this is a known process. Pairing is done using the communication interface, the pairing comprises sharing a media content into a first and at least a second portion of said media content, so that the first electronic device can render the first portion while the at least second electronic device can render the at least second portion of the media content. To trigger such step 410, the user may have to select among different electronic devices automatically detected within the neighborhood or may have to launch a discovery process to detect potential electronic devices to pair with. Also, the user may have to select a media content to share with paired electronic devices. Said media content could be stored on the first electronic device or on another paired electronic device. The media content could also be retrieved from another non paired electronic device. Media content could be provided by an external provider, for example a website. This could be typically a streamed video from a service provider like Netflix™ or a home media server. The user may also have to determine how this media content should be shared.

Typically, if the media content is to be shared between two devices, the application may request the user to determine how the media content should be shared. For a media content like an image or a video, the user may have to choose between the option of cutting in two portions along the vertical axis or along an horizontal axis. This choice may depend on the user wish, on technical constraints of the paired electronic devices or on characteristics of the media content itself. Indeed, a panoramic image may preferably be cut in two portions along a vertical axis as to adapt better to the display elements of the electronic devices.

When sharing the media content between more than two devices, the media content may be split (or shared) into media portion along a combination of vertical and horizontal axis.

In a step 420, once determined how the media content is divided into portions, possibly interacting with the user to decide, the electronic device renders on its display element the first portion of the media content. The rendering of this first portion of the media content is done according to known techniques. That is to say that for example the rendering may depend upon criteria like "landscape" or "portrait" position of the electronic device. Said position can be determined using a motion sensor or set up manually by the user.

As described in step 430, the electronic device then monitors using the motion sensor a user gesture input. This step could be a continuous process, meaning that the electronic device is continuously monitoring for a user gesture input, or it could be triggered by the user, for example by pressing a button before executing the user gesture. Alternatively, a predetermined user gesture can trigger the monitoring during a certain time.

When a user gesture input is detected, the electronic device will compare in a step 440 this user gesture input to a stored gesture signature. The stored gesture signature may be part of a gesture signature database. This database may be provided by the application executed by the electronic device, comprising standards gesture signatures, or it may be populated by the user during a non described training phase. During this training phase, the user may be requested to execute some gesture with the electronic device as to determine the signature of said user gesture and store this signature in the database. Thus, the database may contain a plurality of stored gesture signatures.

In a further step 450, based on the comparison of step 440, the electronic device may render the second portion of the media content. Thus, the detection of a user gesture input corresponding to a stored gesture signature can trigger the rendering of the second portion of the media content instead of the first portion on the electronic device display element.

In a complementary embodiment of present system, a stored gesture signature may be associated to switching the rendered portions of the media content between the first electronic device and a second electronic device. By switching, it should be understood that the rendering of two electronic devices are exchanged. Starting from a situation such as the situation described in FIG. 2A, that is to say, a first electronic device 201 rendering a first portion 212 of a media content and a second electronic device 202 rendering a second portion 211 of the media content, switching the rendered portions of the media content between the first electronic device and a second electronic device leads to situation described in Fig. 2C. In other words, after the switching, the electronic device 201 renders the portion of the media content rendered previously by the electronic device 202, when the electronic device 202 renders the portion of the media content rendered previously by the electronic device 201. Technically, from the point of view of the first electronic device, the execution of the switching comprises the acts of:
- rendering on the display element the second portion 211 of the media content,
- sending a message to the paired second electronic device 202, said message comprising a request to render on the display element of the second electronic device the first portion 212 of the media content.

It is to be noted that in a complementary embodiment, the execution of the switching may comprise the acts of:
- sending a message to the first electronic device 201, said message comprising a request to render on the display element of the first electronic device 201 the second portion 211 of the media content.
- sending a message to the paired second electronic device 202, said message comprising a request to render on the display element of the second electronic device the first portion 212 of the media content.

This is particularly the case if the method is implemented in an application running on a third electronic device different from the first or second electronic devices. In this case, the third electronic device would receive from the first electronic device a message comprising information on the first user gesture input. The third electronic device would then compare the received information on the first user gesture input to a stored gesture signature and send to the first electronic device a message, said message comprising a request to render the second portion of the media content based on the comparison.

Previous embodiment may prove difficult to implement or use when more than two electronic devices are paired. In this case, in a further embodiment, others complementary gesture signatures may be stored, each stored gesture signature being associated to a portion of the media content. In this embodiment, based on the comparison of the user gesture input and the stored gesture signatures, the electronic device identifies a stored gesture signature and renders the portion of the media content associated to the identified gesture signature.

For example, with three paired devices, the media content should be divided in three portions as to allow each electronic device to render one portion of the media content. If we consider that these three paired electronic devices are the electronic device 402, 400 and 403 of FIG. 4 and that the media content to be shared is a panorama photo or video, the three electronic devices 402, 400 and 403 can be arranged as shown in FIG. 4. That is to say, they are arranged next to the other in line. Considering that the media content has a panorama format, it would be divided in three portion along a vertical axis, giving three portions, each equal to a third of the original media content.

A straight forward and intuitive method would name the portion of the media content on the left "one", the portion on the middle "two" and the portion on the right "three". A gesture signature is associated to each "number" or portion of the media content, either by default, integrated in the system, or pre-defined by the user, in a step none described. In a simple illustration, the signature gesture associated to the first portion could be the signature of a gesture like virtually drawing the number "one" with the electronic device. Alternatively, the signature gesture associated to the n^{th} portion of the media content could be the signature of the gesture of repeating n^{th} time a predetermined gesture.

In an alternative embodiment, starting from an electronic device rendering a given portion of a media content, a user gesture input may allow the user to navigate within the different portions. For example, a given user gesture may allow the electronic device to render the portion of the media content immediately at the right of the currently rendered portion while another user gesture may allow the electronic device to render the portion of the media content immediately on top of the currently rendered portion, and so on. In this alternative embodiment, the user may easily "circulate" between the different portions of the media content using few gestures. In this embodiment, user gestures are associated to a direction of displacement between the different portions more than a given portion of the media content.

In another complementary embodiment, user gesture may also exist as to immediately render the portion at the topmost position or the leftmost positioned portion. Thus, in a case with a media content divided in four portion, with a top-left, top-right, bottom-left and bottom-right portion, a user gesture, more precisely a signature gesture for this gesture, may be stored and associated to each of the four position of the portions. In this case, user gestures are associated to a given portion of the media content. It is to be noted that this embodiment and previous embodiment are compatible.

Indeed, the stored gesture signatures may contain signatures corresponding to the various possibilities: rendering an associated portion or rendering a certain portion depending on the rendered portion. Last situation could be seen as associating to a given gesture signature a virtual portion of the media content more than a real portion, the virtual portion being defined for example as the "portion on the left of actually rendered portion" or the "portion on the top of the actually rendered portion". These examples are non limitative.

Step 460 of FIG. 460 would correspond to the user stopping the running application or control circuit on the electronic device, thus stopping the pairing and/or the sharing of a media content between at least two electronic devices.

Finally, the above discussion is intended to be merely illustrative of the present system and should not be construed as limiting the appended claims to any particular embodiment or group of embodiments. Thus, while the present system has been described with reference to exemplary embodiments, such as using a gyroscope as a sensor, it should also be appreciated that numerous modifications and alternative embodiments may be devised by those having ordinary skill in the art without departing from the broader and intended spirit and scope of the present system as set forth in the claims that follow. Further, while exemplary illustrations using two electronic devices were provided to facilitate an understanding of the present system, other embodiment of present method using more than two electronic devices can be implemented in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. An electronic device comprising a display element, a communication interface and a motion sensor, the electronic device further comprising a control circuit adapted to:
- pair with at least a second electronic device using the communication interface, the pairing comprising sharing a media content into a first and at least a second portion of said media content, so that the first electronic device can render the first portion while the at least second electronic device can render the at least second portion,
- render on the display element the first portion of the media content,
- monitor using the motion sensor a first user gesture input,
- compare the first user gesture input to a stored gesture signature,
- render the second portion of the media content based on the comparison.

2. The electronic device according to the previous claim, the stored gesture signature being associated to switching the rendered portion between the first electronic device and a second electronic device, the control circuit being further arranged to execute the switching, the switching comprising the acts of:
- rendering on the display element the second portion of the media content,
- sending a message to the paired second electronic device, said message comprising a request to render on the display element of the second electronic device the first portion of the media content.

3. The electronic device according to the claim 2, the sent message comprising the first portion of the media content.

4. The electronic device according to the claim 2, the switching comprising prior acts of:
- sending a message to the paired second electronic device, said message comprising a request to receive the second portion of the media content,
- receiving a message comprising the second portion of the media content.

5. The electronic device according to the previous claim 1, each portion of the media content being associated to a stored gesture signature, the control circuit being further arranged to, when comparing the first user gesture input:
- identify a stored gesture signature from the first user gesture input,
- render the portion of the media content associated to the identified gesture signature.

6. A method for rendering a portion of a media content on a display element of a first electronic device, the method being performed by an application program executed on the first electronic device, the first electronic device comprising a display element, a communication interface and a motion sensor, the method comprising the acts of:
- pairing with at least a second electronic device using the communication interface, the pairing comprising sharing a media content into a first and at least a second portion of said media content, so that the first electronic device can render the first portion while the at least second electronic device can render the at least second portion,
- rendering on the display element the first portion of the media content,
- monitoring using the motion sensor a first user gesture input,
- comparing the first user gesture input to a stored gesture signature,
- rendering the second portion of the media content based on the comparison.

7. A method according to previous claim, the stored gesture signature being associated to switching the rendered portion between the first electronic device and a second electronic device, the switching comprising the acts of:
- rendering on the display element the second portion of the media content,
- sending a message to the paired second electronic device, said message comprising a request to render on the display element of the second electronic device the first portion of the media content.

8. The method according to the claim 7, the sent message comprising the first portion of the media content.

9. The method according to the claim 7, the switching comprising prior acts of:
- sending a message to the paired second electronic device, said message comprising a request to receive the second portion of the media content,
- receiving a message comprising the second portion of the media content.

10. A method according to claim 6, each portion of the media content being associated to a stored gesture signature, the method further comprising the acts of, when comparing the first user gesture input:
- identifying a stored gesture signature from the first user gesture input,
- rendering the portion of the media content associated to the identified gesture signature.

11. A system for rendering portions of a media content, the system comprising:
- a first electronic device according to any claims 1 to 5,
- at least a second electronic device according to any claims 1 to 5.

12. An application embodied on a computer readable medium and arranged to execute the method of claims 6, 7, 8, 9 or 10.
